# EUROPEAN PATENT SPECIFICATION

(11) **EP 2 429 318 B1**
(45) Date of publication and mention of the grant of the patent: **04.12.2019**
(21) Application number: 10719477.1
(22) Date of filing: 22.04.2010
(51) Int. Cl.: A23L 7/122, A23L 7/126, A23L 33/115, A23P 10/20, A23L 33/12

(54) **OMEGA-3 ENRICHED CEREAL, GRANOLA, AND SNACK BARS**
OMEGA-3 ENGEREICHERTE GETREIDE, MÜSLI-RIEGEL UND SNACK-RIEGEL
CEREALE, GRANOLA ET BARRES NUTRITIVES ENRICHIS EN OMEGA-3

(30) Priority: 24.04.2009 US 429891
(43) Date of publication of application: 21.03.2012
(73) Proprietor: Monsanto Technology LLC, St. Louis, MO 63167 (US)
(72) Inventor: WILKES, Richard S., St. Louis, Missouri 63167 (US)
(74) Representative: dompatent von Kreisler Selting Werner - Partnerschaft von Patent- und Rechtsanwälten mbB
(86) International application number: PCT/US2010/032060
(87) International publication number: WO 2010/124096

(56) References cited:
- WO-A1-2005/065468
- WO-A1-2006/096579
- WO-A1-2008/085841
- WO-A1-2009/058799
- WO-A1-2009/076131
- WO-A2-2006/052662
- WO-A2-2008/025034
- WO-A2-2008/085840
- WO-A2-2009/102558
- FR-A1- 2 679 109

## Description

### FIELD OF THE DISCLOSURE

The invention relates to the enhancement of desirable characteristics in cereal products, such as granola and snack bars through the incorporation of beneficial fatty acids. More specifically, it relates to cereal products comprising stearidonic acid-enriched oil. These modified cereal products show an improvement in nutritional quality while maintaining shelf-life compared to conventional snack bars.

### BACKGROUND OF THE DISCLOSURE

The present invention is directed to cereal products such as granola and snack bars including stearidonic acid ("SDA") or SDA-enriched oil. Specifically, the present invention provides cereal products that have improved nutritional quality.

Traditionally, snack bars have been considered a treat or reward. Recently, however, snack bars have become a popular consumer choice as replacement meals as they are frequently used as the sole nutrition source for people "on the go" who do not have time for a meal. Accordingly, designing snack bars today can be a complex process to meet the ever-changing consumers' taste and expectations e.g., "good for your health," "rich source of protein," or "offers a unique flavor." Most snack bar manufacturers today thus attempt to incorporate a variation in their bars to increase the resulting bar's health image appeal.

Many studies have made a physiological link between dietary fats and pathologies such as obesity and atherosclerosis. In some instances, consumption of fats has been discouraged by the medical establishment. More recently, the qualitative differences between dietary fats and their health benefits have been recognized.

Recent studies have determined that despite their relatively simple biological structures, there are some types of fats that appear to improve body function in some ways. Some fats may, in fact, be essential to certain physiological processes. The wider class of fat molecules includes fatty acids, isoprenols, steroids, other lipids and oil-soluble vitamins. Among these are the fatty acids. The fatty acids are carboxylic acids, which have from 2 to 26 carbon atoms in their "backbone," with none or few desaturated sites in their carbohydrate structure. They generally have dissociation constants (pKa) of about 4.5 indicating that in normal body conditions (physiological pH of 7.4) the vast majority will be in a dissociated form.

With continued experimentation, workers in the field have begun to understand the nutritional need for fats and in particular fatty acids in the diet. For this reason, many in the food industry have begun to focus on fatty acids and lipid technology as a new focus for food production, with its consequent benefits for the consumers consuming the modified products. This focus has been particularly intense for the production and incorporation of omega-3 fatty acids into the diet. Omega-3 fatty acids are long-chain polyunsaturated fatty acids (18-22 carbon atoms in chain length) (LC-PUFAs) with the first of the double bonds ("unsaturations") beginning with the third carbon atom from the methyl end of the molecule. They are called "polyunsaturated" because their molecules have two or more double bonds "unsaturations" in their carbohydrate chain. They are termed "long-chain" fatty acids since their carbon backbone has at least 18 carbon atoms. In addition to stearidonic acid "SDA" the omega-3 family of fatty acids includes alpha-linolenic acid ("ALA"), eicosatetraenoic acid (ETA), eicosapentaenoic acid ("EPA"), docosapentaenoic acid (DPA), and docosahexaenoic acid ("DHA"). ALA can be considered a "base" omega-3 fatty acid, from which EPA and DHA are made in the body through a series of enzymatic reactions, including the production of SDA. Most nutritionists point to DHA and EPA as the most physiologically important of the omega-3 fatty acids with the most beneficial effects. However, SDA has also been shown to have significant health benefits (see for example, US patent 7,163,960). Food or feed compositions comprising SDA or SDA-enriched oil from transgenic plants are known from WO 2008/085841 and WO 2008/085840. Furthermore, it has now been shown that SDA readily enriches the EPA level in red blood cells.

The synthesis process from ALA is called "elongation" (i.e., the molecule becomes longer by incorporating new carbon atoms) and "desaturation" (i.e., new double bonds are created), respectively. In nature, ALA is primarily found in certain plant leaves and seeds (e.g., flax) while EPA and DHA mostly occur in the tissues of cold-water predatory fish (e.g., tuna, trout, sardines and salmon), and in some marine algae or microbes that they feed upon.

In addition to difficulties with simply securing an appropriate supply of LC-PUFAs for societal consumption, often the cost to process LC-PUFAs into food products is restrictive. These omega-3 fatty acids, and some of the other LC-PUFAs can be quickly oxidized leading to undesirable odors and flavors. To reduce the rate of oxidation food processors must therefore either distribute the oil in a frozen condition or encapsulate the desirable fatty acids, each greatly increasing the cost of processing and consequent cost to the consumer. Despite this increased expense, food companies are interested in supplying omega-3 fatty acids and generally healthier food oils because they believe that health conscious consumers may be willing to pay a small premium for an improved diet if a reliable supply can be developed.

Along with the movement of food companies to develop and deliver essential fats and oils as an important component in a healthy human diet, governments have begun developing regulations pushing for the adoption of PUFAs in the diet. There has been difficulty in supplying these needs, however, as there has been an inability to develop a large enough supply of omega-3 containing oil to meet growing marketplace demand. Specifically, in recent years, food companies have begun to realize that already depleted global fish stocks cannot meet any significant growth in future human nutritional needs for omega-3 fatty acids.

Furthermore, as already mentioned, the omega-3 fatty acids commercially deemed to be of highest value, EPA and DHA, which are provided in marine sources, also chemically oxidize very quickly over time limiting commercial availability. Importantly, during the rapid process of EPA and DHA degradation these long chain fatty acids develop rancid and profoundly unsatisfactory sensory properties (e.g., fishy odor and taste) that make their inclusion in many foodstuffs or products difficult or impossible from a commercial acceptance perspective. As such, previous attempts to incorporate omega-3 fatty acids into food products have not met with much success as they have included the addition of highly unstable EPA or DHA.

Furthermore, attempts at incorporating traditional omega-3 fatty acids such as alpha-linolenic acid (ALA) are not practical as these fatty acids are not converted to the beneficial forms efficiently enough. Nutritional studies have shown that, compared to ALA, SDA is 3 to 4 times more efficiently converted in vivo to EPA in humans (Ursin, 2003).

These limitations on supply, stability and sourcing greatly increase cost and correspondingly limit the availability of dietary omega-3 fatty acids. Accordingly, a need exists to enhance the nutritional quality and shelf-life of foodstuffs, and in particular, of cereal products. The SDA-containing cereal product compositions of the current disclosure not only provide needed dietary fat for specific consumers, but also provide other dietary improvements for the commercial production of cereal products.

In addition, a need exists to provide a consumer-acceptable means of delivering EPA and DHA or critical precursors in cereal products in a commercially acceptable way. The current disclosure provides an alternative to fish or microbe-supplied omega-3 fatty acids in the form of cereal products comprising beneficial omega-3 fatty acids and does so utilizing a comparatively chemically stable omega-3 fatty acid, SDA, as a source that offers improved cost-effective production and abundant supply as derived from transgenic plants.

### SUMMARY OF THE DISCLOSURE

The present invention is based on the finding that the incorporation of oil from transgenic plants engineered to contain significant quantities of stearidonic acid (18:4ω3) (SDA) for use in cereal products to improves the fatty acid profile in the resulting products and/or the health of an end consumer. Accordingly, the present invention provides a cereal product comprising from 40 to 60 wt.% of a binder material and from 40 to 60 wt.% of a cereal mixture, wherein the binder material comprises a stearidonic acid (SDA)-enriched soybean oil having from 10 to 30 wt.% SDA, from 0.5% to 1.5% by weight lecithin, from 0.1% to 6.0% by weight liquid oil, from 10% to 40 % by weight sugar syrup or from 0.5% to 5% by weight sugar alcohol, from 1.0% to 5.0% by weight humectant, and from 0.2% to 1.0% by weight salt.

In one particular embodiment, the cereal product is a snack bar.

Exemplary stearidonic acid sources for obtaining the SDA-enriched oil may include transgenic soybeans, transgenic soybean oil, transgenic canola, transgenic canola oil, echium, and echium oil. Additional stearidonic acid sources may include seeds such as soybeans, safflower, canola, echium and corn.

The SDA-enriched oil includes from 10% (by weight) to 30% (by weight) of SDA. In a particularly preferred embodiment, the SDA-enriched oil includes about 20% (by weight) SDA.

In at least one embodiment, the cereal product including the SDA-enriched oil includes about 375 mg SDA-enriched oil in a 42-gram serving of the cereal product. This amount ensures providing the end consumer with the minimum amount of SDA per day needed to enrich EPA in tissues based on James, et al. (2003).

Other features and advantages of this disclosure will become apparent in the following detailed description of preferred embodiments of the invention, taken with reference to the accompanying figures.

### DEFINITIONS

The following definitions are provided to aid those skilled in the art to more readily understand and appreciate the full scope of the present invention. Nevertheless, as indicated in the definitions provided below, the definitions provided are not intended to be exclusive, unless so indicated. Rather, they are preferred definitions, provided to focus the skilled artisan on various illustrative embodiments of the invention.

As used herein the term "cereal product" refers to any food product including at least one type of grain or cereal ingredient. Typically, cereal products can be in the form of breakfast cereals, granola and snack bars.

As used herein the term "snack bar" refers to a cereal bar that has been compressed into sheet form and cut into individual bars.

As used herein the term "SDA-enriched oil" refers to an oil including at least about 10% (by weight) SDA.

### DETAILED DESCRIPTION OF THE DISCLOSURE

### Production of SDA:

Disclosed is an improved method for the plant based production of stearidonic acid and its incorporation into the diets of humans in an effort to improve human health. This production is made possible through the utilization of transgenic plants engineered to produce SDA in sufficiently high yield so as to allow commercial incorporation into food products. For the purposes of the current disclosure the acid and salt forms of fatty acids, for instance, butyric acid and butyrate, arachidonic acid and arachidonate, will be considered interchangeable chemical forms.

All higher plants have the ability to synthesize the main 18 carbon PUFAs, LA and ALA, and in some cases SDA (C18:4n3, SDA), but few are able to further elongate and desaturate these to produce arachidonic acid (AA), EPA or DHA. Synthesis of EPA and/or DHA in higher plants therefore requires the introduction of several genes encoding all of the biosynthetic enzymes required to convert LA into AA, or ALA into EPA and DHA. Taking into account the importance of PUFAs in human health, the successful production of PUFAs (especially the n-3 class) in transgenic oilseeds can then provide a sustainable source of these essential fatty acids for dietary use. The "conventional" aerobic pathway which operates in most PUFA-synthesizing eukaryotic organisms, starts with Δ6 desaturation of both LA and ALA to yield γ-linolenic (GLA, 18:3n6) and SDA.

Turning to Table 1, it is important to provide a basis of what constitutes "normal" ranges of oil composition vis-à-vis the oil compositions of the current disclosure. A significant source of data used to establish basic composition criteria for edible oils and fats of major importance has been the Ministry of Agriculture, Fisheries and Food (MAFF) and the Federation of Oils, Seeds and Fats Associations (FOSFA) at the Leatherhead Food International facility in the United Kingdom.

To establish meaningful standards data, it is preferred that sufficient samples be collected from representative geographical origins and that these oils are pure. In the MAFF/FOSFA work, over 600 authentic commercial samples of vegetable oilseeds of known origin and history, generally of ten different geographical origins, were studied for each of 11 vegetable oils. The extracted oils were analyzed to determine their overall fatty acid composition ("FAC"). The FAC at the 2-position of the triglyceride, sterol and tocopherol composition, triglyceride carbon number and iodine value, protein values in the oil, melting point and solid fat content as appropriate are determined.

Prior to 1981, FAC data were not included in published standards because data of sufficient quality was not available. In 1981, standards were adopted that included FAC ranges as mandatory compositional criteria. The MAFF/FOSFA work provided the basis for later revisions to these ranges.

In general, as more data became available, it was possible to propose fatty acid ranges much narrower and consequently more specific than those adopted in 1981. Table 1 gives examples of FAC of oils that were adopted by the Codex Alimentarius Commission (CAC) in 1981 and ranges for the same oils proposed at the Codex Committee on Fats and Oils (CCFO) meeting held in 1993.

**Table 1: Standards For Fatty Acid Composition Of Oils (% Of Oil).**

| Fatty acid | Soybean oil | | Groundnut oil | | Cottonseed oil | | Sunflower-seed oil | |
|---|---|---|---|---|---|---|---|---|
| | 981 | 993 | 981 | 993 | 981 | 993 | 981 | 993 |
| 14:0 | 0.5 | 0.2 | 0.6 | 0.1 | 4-2 | .6-1 | 0.5 | 0.2 |
| 16:0 | -14 | -13.3 | -16 | .3-14 | 7-31 | 1.4-26.4 | -10 | .6-7.6 |
| 16:1 | 0.5 | 0.2 | 1 | 0.2 | .5-2 | -1.2 | 1 | 0.3 |
| 18:0 | .4-5.5 | .4-5.4 | .3-6.5 | .9-4.4 | -4 | .1-3.3 | -10 | .7-6.5 |
| 18:1 | 9-30 | 7.7-26.1 | 5-72 | 6.4-67.1 | 3-44 | 4.7-21.7 | 4-65 | 4-39.4 |
| 18:2 | 4-62 | 9.8-57.1 | 3-45 | 4-43 | 3-59 | 6.7-58.2 | 0-75 | 8.3-74 |
| 18:3 | -11 | .5-9.5 | 1 | 0.1 | .1-2.1 | -0.4 | -0.7 | -0.2 |
| 20:0 | 1 | .1-0.6 | -3 | .1-1.7 | -0.7 | .2-0.5 | -1.5 | .2-0.4 |
| 20:1 | 1 | 0.3 | .5-2.1 | .7-1.7 | -0.5 | -0.1 | -0.5 | -0.2 |
| 22:0 | 0.5 | .3-0.7 | -5 | .1-4.4 | -0.5 | -0.6 | -1 | .5-1.3 |
| 22:1 | | 0.3 | 2 | 0.3 | -0.5 | -0.3 | -0.5 | -0.2 |
| 22:2 | | | | | | | | -0.3 |
| 24:0 | | 0.4 | .5-3 | .1-2.2 | -0.5 | -0.1 | -0.5 | .2-0.3 |
| 24:1 | | | | 0.3 | | | 0.5 | |

| | | | | | | | | |
|---|---|---|---|---|---|---|---|---|
| *Sources:* Codex Alimentarius Commission, 1983 and 1993. | | | | | | | | |

More recently, oils from transgenic plants have been created. Some embodiments of the present disclosure may incorporate products of transgenic plants such as transgenic soybean oil. Transgenic plants and methods for creating such transgenic plants can be found in the literature (see for example, WO2005/021761). As shown in Table 2, the composition of the transgenic soy oil is substantially different than that of the accepted standards for soy oil.

**Table 2: A comparison of transgenic soy oil and traditional soy oil fatty acid compositions (% of Oil).**

| | Low SDA | Medium SDA | High SDA |
|---|---|---|---|
| | Soy Oil | Soy Oil | Soy Oil |
| C14:0 (Myristic) | 0.10 | 0.11 | 0.10 |
| C16:0 (Palmitic)) | 12.23 | 12.33 | 12.52 |
| C16:1 (Palmitoleic) | 0.10 | 0.10 | 0.15 |
| C18:0 (Stearic) | 3.95 | 3.99 | 4.10 |
| C18:1 (Oleic) | 16.21 | 15.50 | 15.17 |
| C18:2 (Linoleic) | 34.04 | 29.40 | 18.46 |
| C18:3 n6 (Gamma Linolenic) | 4.30 | 5.50 | 4.71 |
| C18:3 n3 (Alpha-Linolenic) | 11.64 | 11.14 | 12.78 |
| C18:4 n3 (Stearidonic) | 14.51 | 18.86 | 28.92 |
| C20:0 (Arachidic) | 0.34 | 0.35 | 0.38 |
| C20:1 (Eicosenoic) | 0.21 | 0.21 | 0.22 |
| C22:0 (Behenic) | 0.32 | 0.32 | 0.34 |
| C24:0 (Lignoceric) | 0.10 | 0.09 | 0.09 |
| Other fatty acids | 0.56 | 0.60 | 0.69 |

The preferred plant species that could be modified to reasonably supply demand are: soybeans, canola, sunflower, corn, and echium but many other plants could also be included as needed and as scientifically practicable. The preferred source of SDA is transgenic soybeans which have been engineered to produce high levels of SDA. The soybeans may be processed at an oil processing facility and oil may be extracted consistent with the methods described in US Patent Applications 2006/0111578, 2006/0110521, and 2006/0111254.

It should be recognized that once produced, the SDA can be used to improve the health characteristics of a great variety of cereal products.

### Binder Material:

As noted above the cereal products of the present invention include a binder material and a cereal mixture. In one embodiment, in addition to the SDA-enriched oil, the binder material includes a liquid oil such as soybean oil, canola oil, corn oil, rapeseed oil and palm oil, and combinations thereof. Typically, these oils are refined, bleached and deodorized. These liquid oils provide improved flavor to the cereal product. Furthermore, some liquid oils, such as palm oil provide a non-trans fat option to the cereal product to the consumer along with improved flavor.

The binder material includes these additional liquid oils in amounts of from 0.1% (by weight) to 6.0% (by weight). In one particular embodiment, the binder material includes the liquid oils in an amount of about 4.10% (by weight).

Apart from the above fat blend of oils, the binder material of the cereal product may include at least one sweetener. The sweeteners are added to the binder material to improve flavor and texture of the end cereal product. Accordingly, the type of sweetener and the amount of sweetener to be included in the binder material will vary depending on the end product flavoring desired by the consumer.

Sweeteners can also help to control the moisture balance of the cereal product. Specifically, sweeteners prevent moisture migration during storage of the cereal products. Accordingly, without the addition of sweeteners, the cereal products may become hard and brittle with age.

Suitable sweeteners used in the cereal product of the invention include sugar syrups and sugar alcohols. Sugar syrups provide a sweet taste in proportion to the types and quantities of the sugars present. The addition of sugar syrups results in a reduced need for additional high intensity sweeteners to impart a desirable sweet taste to cereal products such as snack bars.

When used in snack bars, the type of sugar syrups can also contribute to the texture of the snack bar. In general, sugar syrups comprised of lower levels of complex carbohydrates tend to make softer snack bars. For example, a 63 DE (dextrose equivalency) corn syrup will produce a softer snack bar compared to 42 DE corn syrup. The sugar syrups may suitably be selected from the group consisting of high fructose corn syrup, corn syrup, rice syrup, rice syrup solids, sucrose, honey, and glucose-fructose syrup, fruit juice concentrates, fruit juices, maltodextrin, grain dextrins, and combinations thereof, and may be in solid/powdered or liquid form. In one embodiment, the sugar syrup is high dextrose equivalency (DE) acid-enzyme converted corn syrup, available as 63 DE corn syrup from Tate & Lyle (Decatur, Ill.). 63 DE corn syrup is produced by enzymatically converting the long chain dextrins into mono- and disaccharides, giving this corn syrup a high concentrate of fermentable sugars. In another embodiment, the sugar syrup is high fructose corn syrup. High fructose corn syrup is a high conversion corn syrup that is enzymatically derived and isomerized to produce a saccharide composition comprised primarily of dextrose and fructose.

When using one or more sugar syrups in the binder material, the binder material comprises from 10% (by weight) to 40% (by weight) sugar syrup.

In one embodiment, when the binder material comprises sugar syrups, the binder material additionally comprises one or more bulking agents. Bulking agents generally contribute to the overall volume of the cereal products, without contributing significantly to the product's available energy; that is, without significantly increasing the caloric content of the cereal product. For example, the sugars present in cereal products typically contribute to the energy available in the cereal products; as such, low-energy cereal products often need bulking agents added to them to replace the bulk normally provided by sugar. Suitable bulking agents for use with the sugar syrups can include, for example, maltodextrin, starch, pectin, gelatin, xanthan, gellan, algin, guar, konjak, locust bean, oat fiber, soy fiber, fructooligosaccharides, inulin, iso-maltooligosaccharides, wheat dextrin, corn dextrin, pea fiber, and combinations thereof.

When using one or more bulking agents with the sugar syrups in the binder material, the binder material suitably comprises from 5% (by weight) to 30% (by weight) bulking agent.

In another embodiment, the sweetener to be used in the binder material includes a sugar alcohol. Sugar alcohols may commonly be referred to as polyols or polyhydric alcohols. Different sugar alcohols have different effects on cereal product texture. For example, when used in snack bars, in general, lower molecular weight sugar alcohols tend to produce softer snack bars that retain a soft texture during prolonged storage. Suitable sugar alcohols may be selected from the group consisting of sorbitol, maltitol, glycerin, lactitol, mannitol, isomalt, xylitol, erythritol, and the like, and combinations thereof.

When using one or more sugar alcohols in the binder material, the binder material suitably comprises from 0.5% (by weight) to 5% (by weight) sugar alcohol. More suitably, the binder material of this embodiment comprises from 1% (by weight) to 4% (by weight) sugar alcohol.

In one embodiment, similar to using sugar syrups, when the binder material comprises one or more sugar alcohols, the binder material additionally comprises one or more bulking agents. Suitable bulking agents for use in the present disclosure include, for example, maltodextrin, starch, pectin, gelatin, xanthan, gellan, algin, guar, konjak, locust bean, oat fiber, soy fiber, fructooligosaccharides, inulin, iso-maltooligosaccharides, wheat dextrin, corn dextrin, pea fiber, and combinations thereof.

When using one or more bulking agents with the sugar alcohols in the binder material, the binder material suitably comprises from 5% (by weight) to 25% (by weight) sugar syrup.

Lecithin is included in the binder material to provide improved stability of the cereal product. Furthermore, lecithin may provide improved lubricity and control moisture migration within the cereal product.

The binder material includes lecithin in amounts of from 0.5% (by weight) to 1.5% (by weight). In one particular embodiment, the binder material includes lecithin in an amount of about 0.90% (by weight).

Another ingredient that aids in controlling moisture migration of the cereal product, thereby preventing the cereal product from drying out and becoming hard and brittle with age, is one or more humectant. Particularly preferred for use in the binder material as a humectant is glycerine.

The binder material includes at least one humectant in amounts of from 1.0% (by weight) to 5.0% (by weight). In one particular embodiment, the binder material includes glycerine in an amount of about 2.11% (by weight).

The binder material further includes salt or brine, and may further include antioxidants, and preservatives. Salts, such as sodium chloride and potassium chloride, are included in the binder material in amounts of from 0.2% (by weight) to 1.0% (by weight). In one particular embodiment, the binder material includes salt in an amount of about 0.45% (by weight) to behave as both a flavoring agent and a preservative.

Other preservatives that may be included in the binder material include antimicrobial preservatives, antioxidants, and metal scavengers. Common antimicrobial preservatives include benzoic acid, sorbic acid, sodium benzoate and potassium sorbate.

When included, antimicrobial preservatives are typically present in the binder material in amounts of from 0.005% (by weight) to 0.02% (by weight).

Exemplary antioxidants that will further improve stability of the fatty acids within the products, include ethylenediaminetetraacetic acid (EDTA), tocopherols (Vitamin E), ascorbic acid (Vitamin C), Vitamin C salts (e.g., L-sodium, L-calcium ascorbate), Vitamin C esters (e.g., ascorbyl-5,6-diacetate, ascorbyl-6-palmitate), ethyoxquin, citric acid, calcium citrate, butylated hydroxyl anisole (BHA), butylated hydroxytoluene (BHT), tertiary butyl hydroquinone (TBHQ), natural antioxidants (e.g., rosemary extract), and combinations thereof. One particularly preferred antioxidant for use in the binder material is TBHQ. Specifically, TBHQ has shown antioxidative properties to control oxidation of the exposed nuts and other high fat ingredients that may be included in the cereal products of the present invention.

Amounts of antioxidants to be added to the formulations will typically depend on the antioxidant to be added, and further, on the other components in the cereal product. Exemplary amounts of antioxidants to be added include from 0.005% (by weight) to 0.02% (by weight). In one particularly preferred embodiment, the antioxidant is TBHQ and the binder material includes about 0.01% (by weight).

### Cereal Mixture:

In addition to the binder material, the cereal products of the present invention include a cereal mixture, typically made of dry ingredients. The cereal mixture can include one or more grain or cereal ingredient, such as at least one of rolled oats, nugget/crisp particulates, dry-milled corn meal, wheat, rice, barley, and combinations thereof.

For most cereal products, dry-milled corn meal is used. Corn meal, corn grits, corn flour, and corn cones are all a different form of dry-milled dent corn, and in general only vary in particle size distribution. Selection of the granulation depends upon the type of cereal product and the processing required. For example, for fine texture and cell structure, or softer bite, a fine granulation of corn meal should be used. For a crunchy texture with a slightly large cell structure, a coarse granulation of corn meal is desired. More specifically, the starch in corn meal (i.e., corn starch) achieves the textural attribute and characteristics associated with the corn meal. These attributes can be changed by changing the amylase/amylopectin ratio in the starch. Corn starches with high amylase or high amylopectin, which are used when crunchiness and strength is required in the cereal product, can be found commercially.

In another embodiment, wheat can be used in the cereal mixture. Wheat can be classified into two types: hard and soft. Hard wheat is higher in protein and produces a stronger flour. Wheat starch granules are fairly large (20-40 µm) as compared to other cereal grain starches, and are typically used in baked and fried products.

In yet another embodiment, rice can be used in the cereal mixture, alone or in combination with another cereal grain. There are four types of rice typically made in the United States: long, medium, short, and waxy grain. Rice starch granules are the smallest (2-8 µm) of all grain starches and, thus, digest very easily. Flours made from different rice varieties have major differences in physical and chemical properties, which can affect the cell structure and expansion properties of a cereal product. Typically, rice flour can improve the texture of multi-grain cereal products. In particularly preferred embodiments, rice is used in the cereal mixture in a crisped rice form.

In another embodiment, oats, typically rolled oats, are used in the cereal mixture of the cereal product. Conventionally, oats have not been used in grain-based cereal products as often as wheat and corn as oats have a high oil content (7-9%) and include the enzyme lipase, which must be inactivated prior to use as lipase will catalyze the hydrolysis of oil, which would lead to the production of bitter tasting free fatty acids. Recent discoveries that oat bran can reduce serum cholesterol levels, however, have boosted the market for oats in the food industry.

In some cereal products, barley can be used in small quantities to provide added fiber. Barley has a mild flavor and nutritionally it is similar to wheat. Barley starch granules are medium to large in size as compared to other cereal grains.

Generally, the cereal mixture includes the grain or cereal ingredient in amounts of from 50% (by weight) to 80% (by weight). In one exemplary embodiment, the cereal mixture includes oats and crisp rice as the grain ingredients in a combined amount of about 65% (by weight). The balance of the cereal mixture is typically comprised of optional ingredients, such as fruit pieces and flavoring agents as described below.

In addition to the primary ingredients (i.e., binder material and cereal mixture) of the cereal products described above, the cereal products may comprise additional optional components to further improve various properties of the products. Some potential additional components include flavoring agents, vitamins, minerals, shortening, cake shortening, sucralose, saccharin, aspartame, acesulfame potassium, thaumatin, glycyrrhizin, fruit pieces, nuts, tree nuts, and nut butters, probiotics, prebiotics, leavening agents, peanut flour, coloring agents, antioxidants, fruit juice concentrates, acidulants such as citric acid and malic acid, sodium benzoate, potassium sorbate, neotame, acesulfame, chocolate liquor, and combinations thereof. These optional components can be incorporated into either the binder material or the cereal mixture or can be incorporated into both the binder material and the cereal mixture.

Suitable flavoring agents can include, for example, cocoa powder, peanut flavor, vanilla, chocolate, fruit flavoring, and caramel. The flavoring agents can also include grain or cereal notes. Both natural and synthetic flavoring agents are suitable for use in the cereal products of the present disclosure.

Typically, when used, the cereal product includes one or more flavoring agents in amounts of from 0.1% (by weight) to 5.0% (by weight). In one particular embodiment, the binder material includes a fruit flavoring agent in an amount of about 0.6% (by weight binder material). The cereal product of this embodiment includes the fruit flavoring agent in an amount of about 0.32% (by weight).

### Methods of Producing Cereal Products:

Additionally, disclosed are methods of making the cereal products including SDA. Generally, the cereal products of the present invention are produced by: providing a binder material comprising a stearidonic acid (SDA)-enriched oil; providing a cereal mixture; and coating the cereal mixture with the binder material to make the cereal product.

To prepare the binder material for the cereal product, the liquid components, such as the liquid sugar syrups and sugar alcohols, any liquid humectants, and any liquid flavoring agents or other optional liquid components are first heated to make the liquids fluid. Typically, these ingredients can be heated to temperatures ranging from 41 °C (105°F) to 43 °C (110°F). In one particular embodiment, these ingredients are heated in a double broiler to a temperature of 41 °C (105°F).

Once heated, the dry ingredients of the binder material (e.g., dry sweeteners, salts, etc.) are mixed with the heated liquid components. The mixture may then be further heated until the mixture reaches a temperature of from 71.1 °C (160°F) to 76.7 °C (170°F).

In a separate container, the SDA-enriched oil is blended with any other liquid oils, lecithin, and antioxidants (when used). The blending can be conducted using any blending method known in the food industry. For example, the blending can be conducted using any mixer known in the art or by manual mixing.

The heated mixture above is then removed from the heat and may be blended with the SDA-enriched oil. In some embodiments, ingredients such as lecithin, antioxidants, and any other liquid oils or components used in the binder material may be blended with the heated mixture and SDA-enriched oil. Typically, if flavoring agents are to be used in the binder material, the flavoring agents are mixed in with the heated mixture and SDA-enriched oil at this time.

Once prepared, the binder material is used to coat a dry cereal mixture. The cereal mixture is prepared by mixing, by machine or hand, the grain and cereal ingredients described above, and any other optional ingredients used in the cereal mixture. The binder material is mixed with the cereal mixture until the cereal mixture is sufficiently coated with the binder material. By "sufficiently coated," it should be understood that the cereal mixture and binder material should be mixed to form a substantially homogenous mixture.

Once the cereal product is formed, the cereal product can be used as is in the form of breakfast cereal or granola. The cereal product of the invention is comprised of from 40% (by weight) to 60% (by weight) binder material and from 40% (by weight) to 60% (by weight) cereal mixture. In one particular embodiment, the cereal product is comprised of about 50% (by weight) binder material and about 50% (by weight) cereal mixture.

In some embodiments, after the binder material and cereal mixture have been sufficiently mixed to coat the cereal mixture, the cereal product if further sheeted out using a rolling pin or drum. Typically, the sheeted product is then held for a period of about 30 min to ensure that the binder material of the cereal product has had sufficient time to dry.

The sheeted product may then be cut into cereal products such as snack bars. Typically, the snack bars are cut to any suitable size as known in the food industry. In one particular embodiment, the snack bars are cut to a size of about 42 g.

In one embodiment, the products are made into a multi-layer snack bar by sheeting the products and then layering at least a first sheeted cereal product on top of a second sheeted cereal product. As described herein as a two layered multi-layer snack bar, it should be recognized that the snack bar can be produced such as to have more than two layers, such as three layers, four layers, five layers, or even more than five layers. Furthermore, the layers of the multi-layer snack bar may be comprised of the same or different cereal product.

In one embodiment, the products may be covered or enrobed in a flavoring or texturizing coating prior to being packaged or cut into snack bars. The coatings add flavor, texture, and eye appeal to any of the above described products. The coatings include, but are not limited to, caramel, dark, light, milk, or white chocolate, yogurt, fruit, nuts, grains and cereals, or any combination thereof. In one embodiment, a caramel coating containing sugar is used, and in another aspect, the caramel coating is a sugar-free caramel and comprises maltitol, maltodextrin, butter, sodium caseinate, natural flavors, salt, glycerol monostearate, and soya lecithin.

In another embodiment, the coating is a fruit coatings. For example, fruit coatings may include dried fruit pieces such as raspberries or cherries. The fruit coatings can also include freeze-dried fruit. The nuts in the product can comprise pistachios, almonds, peanuts, or walnuts, although any type of nut may be used as well as any combination of nuts. The nuts may also be roasted and/or salted. In another embodiment, the coatings comprise grains or cereals, which include sunflower, sprouts, flaxseed, flax, wheat flakes, rice spelt, kamut, quinoa, white sesame, soybeans, barley, millet, oats, rye, and triticale.

The coating can be a compounded confectionary coating or a non-confectionary (e.g., sugar free) coating. The coating can be smooth, or can contain solid particles or pieces. The coating may be a confectionery coating, such as chocolate, or other confectionery coatings such as chocolate-flavored, peanut butter-flavored, caramel-flavored and yogurt-flavored confectionery coatings (i.e., coatings not meeting the standard of identity for chocolate).

The coating may cover all or part of the cereal product, e.g., the top or the sides, can be coated. If desired, the coating may include nutrient additives such as protein, calcium, vitamins, and other minerals.

Additionally, as a multi-layered snack bar described above, at least two layers of sheeted product are employed. The sheeted layers may be the same or different. The sheeted layers, the same or different, may adjacently reside or may be separated by a filling layer. The single filling layer, when only two sheeted layers are used, resides between the two sheeted layers. When three or more sheeted layers are used, the filling layers that reside between the sheeted layers may be the same or different. Additionally, the multi-layered snack bar may be covered with a coating as described above.

One or more of the filling layers may be comprised of ingredients such as a fruit filling, a sandwich cookie crème filling, an icing filling, a caramel filling, a chocolate filling and a marshmallow filling and combinations thereof. Filling layers herein are semisolid and pliable at the time of application, as opposed to the sheeted cereal product base layers used in formation of the snack bars, which are substantially firm upon application. The base layers form sheets. Examples of suitable filling layers herein are the peanut creme layer, fruit filling layers such as strawberry, grape, apple, banana, raspberry, blueberry, mixed berry, nectarines, oranges, pineapples, marshmallow, fudge, caramel, butterscotch, icings, sandwich cookie creme fillings such as those which might be used in sandwich cookies, and banana creme.

Once prepared, the various cereal products described above are packaged. Various packaging machines are available on the market and will not be described herein.

Surprisingly, the inventors have found that including SDA compositions from transgenic plant sources in cereal products as described above is highly effective in increasing the omega-3 fatty acid levels of SDA (18:4) and EPA (eicosapentaenoic acid). Furthermore, plant sources, such as soybean oil, have been found to provide more stable fatty acids to the products. Specifically, SDA soybean oil was shown to take 5 to 10 times longer to oxidize as measured by peroxide values and anisidine values as compared to fish oils in stability tests.

Furthermore, there has been found to be little difference in the appearance, aroma, flavor, texture, or overall consumer acceptability, of the cereal products including SDA as compared to conventional cereal products without omega-3 fatty acids. Specifically, as shown in the Examples below, SDA-containing snack bars at 2 months showed no significant difference in the appearance, aroma, flavor, or texture attributes. Similar results were seen at 6 months, 9 months, and 12 months.

Furthermore, while there are differences in all attributes between the SDA-containing snack bar and control bar at 6 months, the differences were to a lesser degree between the SDA-containing snack bar and the control bar as compared to the snack bars including the competitive omega-3 fatty acids and the control snack bar. Similar results were seen at 9 months and 12 months.

### ILLUSTRATIVE EMBODIMENTS OF THE DISCLOSURE

The following examples are included to demonstrate the invention. It should be appreciated by those of skill in the art that the techniques disclosed in the examples which follow represent techniques discovered by the inventors to function well in the practice of the invention, and thus can be considered to constitute preferred modes for its practice.

In the examples below, transgenic soybean oil containing SDA was used. Similar results would be obtained when using oil derived from other transgenic plants such as corn or canola.

### Example 1: Snack Bars - A 12-month Study

A 12-month study was conducted to determine whether a snack bar containing SDA had an equivalent sensory shelf life as compared to a control snack bar (i.e., conventional snack bar without SDA) and to other snack bars using alternative or competitive omega-3 fatty acids.

The compositions for the snack bars analyzed are shown in Tables 3-8.

**Table 3: Snack Bar Compositions - Using Fish Oil.**

| | Commercial Supplier | Amount in Binder Material or Cereal Mixture (g) | Wt. % in Binder Material or Cereal Mixture | Amount in Total Snack Bar (g) | Wt. % in Total Snack Bar |
|---|---|---|---|---|---|
| Binder Material | | | | | |
| High Fructose Corn Syrup 55 | Cargill, Inc. (Minneapolis, MN) | 12 | 13.14 | 18.966 | 6.32 |
| High Maltose Corn Syrup | Cargill, Inc. (Minneapolis, MN) | 24 | 26.29 | 37.931 | 12.64 |
| Glycerine | Chicago Sweeteners (Des Plaines, IL) | 4 | 4.38 | 6.321 | 2.11 |
| Sugar | Chicago Sweeteners (Des Plaines, IL) | 12.5 | 13.69 | 19.756 | 6.59 |
| Maltodextrin M100 | Grain Processing Corp. (Muscatine, IA) | 14.375 | 15.74 | 22.719 | 7.57 |
| Crystalline Fructose | Tate & Lyle (London, England) | 2.50 | 2.74 | 3.951 | 1.32 |
| Honey | Domino Specialty Ingredients (Baltimore, MD) | 2.50 | 2.74 | 3.951 | 1.32 |
| Salt | Morton (Chicago, IL) | 0.86 | 0.94 | 1.359 | 0.45 |
| Mixed Berry Flavor #658772 | Givaudan (Cincinnati, OH) | 0.60 | 0.66 | 0.948 | 0.32 |
| TBHQ | Eastman Chemical Co. (Kingsport, TN) | 0.016 | 0.02 | 0.025 | 0.01 |
| Soybean Oil | Cargill, Inc. (Minneapolis, MN) | 13.46 | 14.74 | 21.273 | 7.09 |
| Lecithin (SOLEC HR) | Solae LLC (St. Louis, MO) | 1.7 | 1.86 | 2.687 | 0.90 |
| OmegaPure Fish Oil | OmegaPure (Houston, TX) | 2.79 | 3.06 | 4.410 | 1.47 |
| Total | | 91.301 | 100.00 | 144.3 | |

| Cereal Mixture | | | | | |
|---|---|---|---|---|---|
| Old Fashioned Oats | Quaker (Chicago, IL) | 35.00 | 35.00 | 54.495 | 18.17 |
| Crisp Rice | Riviana (Houston, TX) | 15.00 | 15.00 | 23.355 | 7.79 |
| GMI Crisp Rice | Kerry Group PLC (Ireland) | 15.00 | 15.00 | 23.355 | 7.79 |
| Dried Blueberries | Tree Top (Selah, WA) | 10.00 | 10.00 | 15.57 | 5.19 |
| Dried Cranberries | Graceland Fruit (Frankfort, MI) | 10.00 | 10.00 | 15.57 | 5.19 |
| Roasted Peanuts | Algood Food Co. (Louisville, KY) | 7.50 | 7.50 | 11.678 | 3.89 |
| Almonds, sliced | Blue Diamond Growers (Sacramento, CA) | 7.50 | 7.50 | 11.678 | 3.89 |
| Total | | 100 | 100.00 | 155.7 | |

**Table 4: Snack Bar Compositions - Using Omega Flax Seed Oil.**

| | Commercial Supplier | Amount in Binder Material or Cereal Mixture (g) | Wt. % in Binder Material or Cereal Mixture | Amount in Total Snack Bar (g) | Wt. % in Total Snack Bar |
|---|---|---|---|---|---|
| Binder Material | | | | | |
| High Fructose Corn Syrup 55 | Cargill, Inc. (Minneapolis, MN) | 12 | 13.14 | 18.966 | 6.32 |
| High Maltose Corn Syrup | Cargill, Inc. (Minneapolis, MN) | 24 | 26.29 | 37.931 | 12.64 |
| Glycerine | Chicago Sweeteners (Des Plaines, IL) | 4 | 4.38 | 6.321 | 2.11 |
| Sugar | Chicago Sweeteners (Des Plaines, IL) | 12.5 | 13.69 | 19.756 | 6.59 |
| Maltodextrin M100 | Grain Processing Corp. (Muscatine, IA) | 14.375 | 15.74 | 22.719 | 7.57 |
| Crystalline Fructose | Tate & Lyle (London, England) | 2.50 | 2.74 | 3.951 | 1.32 |
| Honey | Domino Specialty Ingredients (Baltimore, MD) | 2.50 | 2.74 | 3.951 | 1.32 |
| Salt | Morton (Chicago, IL) | 0.86 | 0.94 | 1.359 | 0.45 |
| Mixed Berry Flavor #658772 | Givaudan (Cincinnati, OH) | 0.60 | 0.66 | 0.948 | 0.32 |
| TBHQ | Eastman Chemical Co. (Kingsport, TN) | 0.016 | 0.02 | 0.025 | 0.01 |
| Soybean Oil | Cargill, Inc. (Minneapo lis, MN) | 14.21 | 15.56 | 22.459 | 7.49 |
| Lecithin (SOLEC HR) | Solae LLC (St. Louis, MO) | 1.7 | 1.86 | 2.687 | 0.90 |
| Polar HiOmega Flax Seed Oil | Polar Foods, Inc. (Anchorage, AK) | 2.04 | 2.23 | 3.224 | 1.07 |
| Total | | 91.301 | 100.00 | 144.3 | |

| Cereal Mixture | | | | | |
|---|---|---|---|---|---|
| Old Fashioned Oats | Quaker (Chicago, IL) | 35.00 | 35.00 | 54.495 | 18.17 |
| Crisp Rice | Riviana (Houston, TX) | 15.00 | 15.00 | 23.355 | 7.79 |
| GMI Crisp Rice | Kerry Group PLC (Ireland) | 15.00 | 15.00 | 23.355 | 7.79 |
| Dried Blueberries | Tree Top (Selah, WA) | 10.00 | 10.00 | 15.57 | 5.19 |
| Dried Cranberries | Graceland Fruit (Frankfort, MI) | 10.00 | 10.00 | 15.57 | 5.19 |
| Roasted Peanuts | Algood Food Co. (Louisville, KY) | 7.50 | 7.50 | 11.678 | 3.89 |
| Almonds, sliced | Blue Diamond Growers (Sacramento, CA) | 7.50 | 7.50 | 11.678 | 3.89 |
| Total | | 100 | 100.00 | 155.7 | |

**Table 5: Snack Bar Compositions - Using Algal Oil.**

| | Commercial Supplier | Amount in Binder Material or Cereal Mixture (g) | Wt. % in Binder Material or Cereal Mixture | Amount in Total Snack Bar (g) | Wt. % in Total Snack Bar |
|---|---|---|---|---|---|
| Binder Material | | | | | |
| High Fructose Corn Syrup 55 | Cargill, Inc. (Minneapolis, MN) | 12 | 13.14 | 18.966 | 6.32 |
| High Maltose Corn Syrup | Cargill, Inc. (Minneapolis, MN) | 24 | 26.29 | 37.931 | 12.64 |
| Glycerine | Chicago Sweeteners (Des Plaines, IL) | 4 | 4.38 | 6.321 | 2.11 |
| Sugar | Chicago Sweeteners (Des Plaines, IL) | 12.5 | 13.69 | 19.756 | 6.59 |
| Malto dextrin M100 | Grain Processing Corp. (Muscatine, IA) | 14.375 | 15.74 | 22.719 | 7.57 |
| Crystalline Fructose | Tate & Lyle (London, England) | 2.50 | 2.74 | 3.951 | 1.32 |
| Honey | Domino Specialty Ingredients (Baltimore, MD) | 2.50 | 2.74 | 3.951 | 1.32 |
| Salt | Morton (Chicago, IL) | 0.86 | 0.94 | 1.359 | 0.45 |
| Mixed Berry Flavor #658772 | Givaudan (Cincinnati, OH) | 0.60 | 0.66 | 0.948 | 0.32 |
| TBHQ | Eastman Chemical Co. (Kingsport, TN) | 0.016 | 0.02 | 0.025 | 0.01 |
| Soybean Oil | Cargill, Inc. (Minneapolis, MN) | 14.67 | 16.07 | 23.185 | 7.73 |
| Lecithin (SOLEC HR) | Solae LLC (St. Louis, MO) | 1.7 | 1.86 | 2.687 | 0.90 |
| Martek DHA-S Algal Oil | Martek Biosciences Corp. (Columbia, MD) | 1.58 | 1.73 | 2.497 | 0.83 |
| Total | | 91.301 | 100.00 | 144.3 | |

| Cereal Mixture | | | | | |
|---|---|---|---|---|---|
| Old Fashioned Oats | Quaker (Chicago, IL) | 35.00 | 35.00 | 54.495 | 18.17 |
| Crisp Rice | Riviana (Houston, TX) | 15.00 | 15.00 | 23.355 | 7.79 |
| GMI Crisp Rice | Kerry Group PLC (Ireland) | 15.00 | 15.00 | 23.355 | 7.79 |
| Dried Blueberries | Tree Top (Selah, WA) | 10.00 | 10.00 | 15.57 | 5.19 |
| Dried Cranberries | Graceland Fruit (Frankfort, MI) | 10.00 | 10.00 | 15.57 | 5.19 |
| Roasted Peanuts | Algood Food Co. (Louisville, KY) | 7.50 | 7.50 | 11.678 | 3.89 |
| Almonds, sliced | Blue Diamond Growers (Sacramento, CA) | 7.50 | 7.50 | 11.678 | 3.89 |
| Total | | 100 | 100.00 | 155.7 | |

**Table 6: Snack Bar Compositions - Using Encapsulated Fish Oil.**

| | Commercial Supplier | Amount in Binder Material or Cereal Mixture (g) | Wt. % in Binder Material or Cereal Mixture | Amount in Total Snack Bar (g) | Wt. % in Total Snack Bar |
|---|---|---|---|---|---|
| Binder Material | | | | | |
| High Fructose Corn Syrup 55 | Cargill, Inc. (Minneapolis, MN) | 12 | 13.14 | 18.966 | 6.32 |
| High Maltose Corn Syrup | Cargill, Inc. (Minneapolis, MN) | 24 | 26.29 | 37.931 | 12.64 |
| Glycerine | Chicago Sweeteners (Des Plaines, IL) | 4 | 4.38 | 6.321 | 2.11 |
| Sugar | Chicago Sweeteners (Des Plaines, IL) | 12.5 | 13.69 | 19.756 | 6.59 |
| Maltodextrin M100 | Grain Processing Corp. (Muscatine, IA) | 14.375 | 15.74 | 22.719 | 7.57 |
| Crystalline Fructose | Tate & Lyle (London, England) | 2.50 | 2.74 | 3.951 | 1.32 |
| Honey | Domino Specialty Ingredients (Baltimore, MD) | 2.50 | 2.74 | 3.951 | 1.32 |
| Salt | Morton (Chicago, IL) | 0.86 | 0.94 | 1.359 | 0.45 |
| Mixed Berry Flavor #658772 | Givaudan (Cincinnati, OH) | 0.60 | 0.66 | 0.948 | 0.32 |
| TBHQ | Eastman Chemical Co. (Kingsport, TN) | 0.016 | 0.02 | 0.025 | 0.01 |
| Soybean Oil | Cargill, Inc. (Minneapolis, MN) | 12.67 | 13.88 | 20.025 | 6.67 |
| Lecithin (SOLEC HR) | Solae LLC (St. Louis, MO) | 1.7 | 1.86 | 2.687 | 0.90 |
| Encapsulated Fish Oil | Ocean Nutrition (Nova Scotia, Canada) | 3.58 | 3.92 | 5.658 | 1.89 |
| Total | | 91.301 | 100.00 | 144.3 | |

| Cereal Mixture | | | | | |
|---|---|---|---|---|---|
| Old Fashioned Oats | Quaker (Chicago, IL) | 35.00 | 35.00 | 54.495 | 18.17 |
| Crisp Rice | Riviana (Houston, TX) | 15.00 | 15.00 | 23.355 | 7.79 |
| GMI Crisp Rice | Kerry Group PLC (Ireland) | 15.00 | 15.00 | 23.355 | 7.79 |
| Dried Blueberries | Tree Top (Selah, WA) | 10.00 | 10.00 | 15.57 | 5.19 |
| Dried Cranberries | Graceland Fruit (Frankfort, MI) | 10.00 | 10.00 | 15.57 | 5.19 |
| Roasted Peanuts | Algood Food Co. (Louisville, KY) | 7.50 | 7.50 | 11.678 | 3.89 |
| Almonds, sliced | Blue Diamond Growers (Sacramento, CA) | 7.50 | 7.50 | 11.678 | 3.89 |
| Total | | 100 | 100.00 | 155.7 | |

**Table 7: Snack Bar Compositions - Using SDA Oil.**

| | Commercial Supplier | Amount in Binder Material or Cereal Mixture (g) | Wt. % in Binder Material or Cereal Mixture | Amount in Total Snack Bar (g) | Wt. % in Total Snack Bar |
|---|---|---|---|---|---|
| Binder Material | | | | | |
| High Fructose Corn Syrup 55 | Cargill, Inc. (Minneapolis, MN) | 12 | 13.14 | 18.966 | 6.32 |
| High Maltose Corn Syrup | Cargill, Inc. (Minneapolis, MN) | 24 | 26.29 | 37.931 | 12.64 |
| Glycerine | Chicago Sweeteners (Des Plaines, IL) | 4 | 4.38 | 6.321 | 2.11 |
| Sugar | Chicago Sweeteners (Des Plaines, IL) | 12.5 | 13.69 | 19.756 | 6.59 |
| Malto dextrin M100 | Grain Processing Corp. (Muscatine, IA) | 14.375 | 15.74 | 22.719 | 7.57 |
| Crystalline Fructose | Tate & Lyle (London, England) | 2.50 | 2.74 | 3.951 | 1.32 |
| Honey | Domino Specialty Ingredients (Baltimore, MD) | 2.50 | 2.74 | 3.951 | 1.32 |
| Salt | Morton (Chicago, IL) | 0.86 | 0.94 | 1.359 | 0.45 |
| Mixed Berry Flavor #658772 | Givaudan (Cincinnati, OH) | 0.60 | 0.66 | 0.948 | 0.32 |
| TBHQ | Eastman Chemical Co. (Kingsport, TN) | 0.016 | 0.02 | 0.025 | 0.01 |
| Soybean Oil | Cargill, Inc. (Minneapolis, MN) | 7.79 | 8.53 | 12.311 | 4.10 |
| Lecithin (SOLEC HR) | Solae LLC (St. Louis, MO) | 1.7 | 1.86 | 2.687 | 0.90 |
| Monsanto SDA Oil | Monsanto (St. Louis, MO) | 8.46 | 9.27 | 13.370 | 4.46 |
| Total | | 91.301 | 100.00 | 144.3 | |

| Cereal Mixture | | | | | |
|---|---|---|---|---|---|
| Old Fashioned Oats | Quaker (Chicago, IL) | 35.00 | 35.00 | 54.495 | 18.17 |
| Crisp Rice | Riviana (Houston, TX) | 15.00 | 15.00 | 23.355 | 7.79 |
| GMI Crisp Rice | Kerry Group PLC (Ireland) | 15.00 | 15.00 | 23.355 | 7.79 |
| Dried Blueberries | Tree Top (Selah, WA) | 10.00 | 10.00 | 15.57 | 5.19 |
| Dried Cranberries | Graceland Fruit (Frankfort, MI) | 10.00 | 10.00 | 15.57 | 5.19 |
| Roasted Peanuts | Algood Food Co. (Louisville, KY) | 7.50 | 7.50 | 11.678 | 3.89 |
| Almonds, sliced | Blue Diamond Growers (Sacramento, CA) | 7.50 | 7.50 | 11.678 | 3.89 |
| Total | | 100 | 100.00 | 155.7 | |

**Table 8: Snack Bar Compositions - Control.**

| | Commercial Supplier | Amount in Binder Material or Cereal Mixture (g) | Wt. % in Binder Material or Cereal Mixture | Amount in Total Snack Bar (g) | Wt. % in Total Snack Bar |
|---|---|---|---|---|---|
| Binder Material | | | | | |
| High Fructose Corn Syrup 55 | Cargill, Inc. (Minneapolis, MN) | 12 | 13.14 | 18.966 | 6.32 |
| High Maltose Corn Syrup | Cargill, Inc. (Minneapolis, MN) | 24 | 26.29 | 37.931 | 12.64 |
| Glycerine | Chicago Sweeteners (Des Plaines, IL) | 4 | 4.38 | 6.321 | 2.11 |
| Sugar | Chicago Sweeteners (Des Plaines, IL) | 12.5 | 13.69 | 19.756 | 6.59 |
| Malto dextrin M100 | Grain Processing Corp. (Muscatine, IA) | 14.375 | 15.74 | 22.719 | 7.57 |
| Crystalline Fructose | Tate & Lyle (London, England) | 2.50 | 2.74 | 3.951 | 1.32 |
| Honey | Domino Specialty Ingredients (Baltimore, MD) | 2.50 | 2.74 | 3.951 | 1.32 |
| Salt | Morton (Chicago, IL) | 0.86 | 0.94 | 1.359 | 0.45 |
| Mixed Berry Flavor #658772 | Givaudan (Cincinnati, OH) | 0.60 | 0.66 | 0.948 | 0.32 |
| TBHQ | Eastman Chemical Co. (Kingsport, TN) | 0.016 | 0.02 | 0.025 | 0.01 |
| Soybean Oil | Cargill, Inc. (Minneapolis, MN) | 16.25 | 17.80 | 25.682 | 8.56 |
| Lecithin (SOLEC HR) | Solae LLC (St. Louis, MO) | 1.7 | 1.86 | 2.687 | 0.90 |
| Total | | 91.301 | 100.00 | 144.3 | |

| Cereal Mixture | | | | | |
|---|---|---|---|---|---|
| Old Fashioned Oats | Quaker (Chicago, IL) | 35.00 | 35.00 | 54.495 | 18.17 |
| Crisp Rice | Riviana (Houston, TX) | 15.00 | 15.00 | 23.355 | 7.79 |
| GMI Crisp Rice | Kerry Group PLC (Ireland) | 15.00 | 15.00 | 23.355 | 7.79 |
| Dried Blueberries | Tree Top (Selah, WA) | 10.00 | 10.00 | 15.57 | 5.19 |
| Dried Cranberries | Graceland Fruit (Frankfort, MI) | 10.00 | 10.00 | 15.57 | 5.19 |
| Roasted Peanuts | Algood Food Co. (Louisville, KY) | 7.50 | 7.50 | 11.678 | 3.89 |
| Almonds, sliced | Blue Diamond Growers (Sacramento, CA) | 7.50 | 7.50 | 11.678 | 3.89 |
| Total | | 100 | 100.00 | 155.7 | |

The snack bars were prepared by heating the high fructose syrup and high maltose syrup with the glycerine and honey in a double boiler to a temperature of approximately 41 °C (105°F) to make the syrups fluid. The sugar, crystalline fructose, and salt were then added to the syrup blend and blended. M100 was then blended into the mixture and the mixture was further heated until the mixture reached a temperature of from 71.1 °C (160°F) to 76.7 °C (170°F). The mixture was removed from the heat and an oil blend including the omega-3 enriched oils (if any), soybean oil, TBHQ, and lecithin were added. The berry flavoring agent was finally added to produce the binder material.

Once the binder material was produced, the cereal mixture was mixed with the binder material, thereby coating the cereal mixture with the binder material. The coated cereal product was then sheeted out and allowed to sit for about 30 min. Finally, the sheeted cereal product was cut into snack bars having a size of about 42 gr.

The snack bars were stored at a temperature of 22.8 °C (73°F) throughout the duration of the study. Snack bar samples were then submitted for sensory analysis.

A panel of trained assessors (5) participated in discussion and training sessions to identify and define key descriptive attributes that discriminated well between the formulations. In subsequent rating sessions the panel used Sensory Spectrum Analysis, with verbal anchors to rate the perceived intensity of each attribute. Each panelist assessed one replicate of each sample at six time points (e.g., 0, 2 months, 4 months, 6 months, 9 months, and 12 months) over a period of twelve months. Plain crackers and mineral water were used as palate cleansers between samples. Samples were tasted and chewed, and then spat out rather than being swallowed.

The sensory attributes and definitions produced for the formulations were:

| Appearance | |
|---|---|
| Grain Color | The hue of the grain in the sample ranging from light to dark, not including fruits or nuts. |
| Cranberry Color | The hue of the pieces of cranberry in the sample ranging from light to dark red. |
| Shiny | The degree to which the sample is shiny as opposed to matte. |
| Flexibility | The degree to which the sample is flexible and resistant to breaking when bent. |

| Aroma/Flavor | |
|---|---|
| Total | The total intensity of the aromas or flavors in the product. |
| Aroma/Flavor | |
| Fruity (Artificial) | The aroma/flavor associated with artificial fruit flavoring. |
| Total Grain | Aroma/flavor associated with toasted mixed grains such as oat, rice, soy, and flax. |
| Total Nut | The aroma/flavor associated with nuts such as peanuts and almonds. |
| Toasted Nut | The aroma/flavor associated with toasted nuts as opposed to raw nuts. |
| Sweet | One of the basic tastes, perceived primarily on the tip of the tongue; common to sucrose and other sugars as well as high intensity sweeteners. |
| Total Off | Any aroma/flavor not intended to be in the product, typically an undesirable note. |
| Aroma/Flavor | |
| Total Oil | The total aroma/flavor intensity of oil in the sample. |
| Oxidized | The aroma/flavor associated with oxidized or stale oil or nuts, such as cardboard, painty, or fishy. |

| Texture | |
|---|---|
| Initial Hardness | The force required to break with the incisors in the first bite. |
| Crispness | The amount of noise the product makes during the chew down. Higher pitch sounds are more crisp. |
| Chewiness | The total amount of 'work' or force required to chew the sample until broken down sufficiently for swallowing. |
| Toothpacking | The degree to which the sample becomes impacted into the molars on chew down. |

Additionally, the percent quality change of the snack bar after the five time periods (e.g., 2 months, 4 months, 6 months, 9 months, and 12 months) during the twelve-month period, that is, the qualitative difference of each snack bar sample from the initial evaluation of the control snack bar to end of each time period was also analyzed.

The results of the sensory analysis are summarized in Tables 9-14. Differences that were perceived in the SDA-containing snack bar as compared to the control snack bar initially were associated with aroma and to some extent flavor, however, overall, there was no significant difference in any of the attributes. Similar results were seen at 2 months. While there were slight differences in all attributes between the SDA-containing snack bar and control bar at 4 months, the differences are not significant and as compared to the snack bars including alternative omega-3 fatty acids, the differences were to a lesser extent between the SDA-containing snack bar and the control bar. At 6, 9 and 12 months, the differences were to an even lesser extent between the SDA-containing snack bar and the control bar as compared to the differences of the snack bars including alternative omega-3 fatty acids as compared to the control bar.

**Table 9. Effect of omega-3 enriched oil (snack bar composition with omega-3 fatty acids) and conventional soybean oil (control snack bar) on the sensory attributes of snack bar cereal products at 0 time.**

| Attribute | Control Snack Bar | Snack Bar with SDA-enriched Oil | Snack Bar with Flax Seed Oil | Snack Bar with Algal Oil | Snack Bar with Fish Oil | Snack Bar with Encapsulated Fish Oil |
|---|---|---|---|---|---|---|
| Appearance | | | | | | |
| Grain Color | 3.0 | 3.0 | 3.5 | 3.0 | 3.0 | 3.0 |
| Cranberry Color | 4.0 | 4.0 | 4.0 | 4.0 | 4.0 | 4.0 |
| Shiny | 12.0 | 12.0 | 12.0 | 12.0 | 12.0 | 12.0 |
| Flexibility | 10.0 | 10.0 | 10.0 | 10.0 | 10.0 | 10.0 |

| Aroma | | | | | | |
|---|---|---|---|---|---|---|
| Total Aroma | 10.0 | 9.0 | 9.5 | 9.5 | 10.0 | 10.0 |
| Artificial Fruit/Berry | 8.5 | 7.5 | 8.0 | 7.5 | 8.5 | 8.0 |
| Total Grain | 3.0 | 4.0 | 3.0 | 4.0 | 3.0 | 3.0 |
| Total Nut | 4.0 | 5.0 | 4.5 | 5.0 | 4.0 | 4.0 |
| Total Off Aroma | 0.5 | 0.5 | 0.5 | 0.5 | 0.5 | 2.0 |
| Total Oil | 0.5 | 0.5 | 0.5 | 0.5 | 0.5 | 1.0 |
| Oxidized | 0.5 | 0.5 | 0.5 | 0.5 | 0.5 | 1.0 |

| First Bite | | | | | | |
|---|---|---|---|---|---|---|
| Initial Hardness | 3.0 | 3.0 | 3.0 | 3.0 | 3.0 | 3.0 |

| Flavor | | | | | | |
|---|---|---|---|---|---|---|
| Total Flavor | 12.0 | 10.5 | 11.5 | 11.0 | 11.5 | 12.0 |
| Artificial Fruit/Berry | 10.0 | 8.5 | 9.5 | 8.5 | 9.0 | 9.0 |
| Total Grain | 3.5 | 4.5 | 3.5 | 4.0 | 3.5 | 3.5 |
| Toasted Nut | 4.0 | 5.0 | 4.5 | 5.0 | 4.5 | 4.0 |
| Sweet | 9.0 | 8.0 | 8.5 | 8.5 | 9.0 | 9.0 |
| Total Off Flavor | 1.0 | 1.0 | 1.0 | 1.0 | 1.5 | 2.5 |
| Total Oil | 1.0 | 1.0 | 1.0 | 1.0 | 1.0 | 1.5 |
| Oxidized | 1.0 | 1.0 | 1.0 | 1.0 | 1.0 | 1.5 |

| Texture | | | | | | |
|---|---|---|---|---|---|---|
| Chewiness | 8.0 | 8.0 | 8.0 | 8.0 | 8.0 | 8.0 |
| Crispness | 5.0 | 5.0 | 5.5 | 5.5 | 5.0 | 5.0 |
| Toothpacking | 10.0 | 10.0 | 10.0 | 10.0 | 10.0 | 10.5 |
| % Quality Change | | | | | | |

| | | | | | | |
|---|---|---|---|---|---|---|
| Scale Range 0-15 | | | | | | |

**Table 10: Effect of omega-3 enriched oil/ (snack bar composition with omega-3 fatty acids) and conventional soybean oil (control snack bar) on the sensory attributes of snack bar cereal products at 2 months.**

| Attribute | Control Snack Bar | Snack Bar with SDA-enriched Oil | Snack Bar with Flax Seed Oil | Snack Bar with Algal Oil | Snack Bar with Fish Oil | Snack Bar with Encapsulated Fish Oil |
|---|---|---|---|---|---|---|
| Appearance | | | | | | |
| Grain Color | 3.0 | 3.5 | 4.0 | 4.0 | 3.5 | 3.5 |
| Cranberry Color | 4.0 | 4.0 | 4.5 | 4.0 | 4.0 | 4.5 |
| Shiny | 12.0 | 12.0 | 12.0 | 12.0 | 12.0 | 11.0 |
| Flexibility | 10.0 | 10.0 | 10.0 | 10.0 | 9.0 | 10.0 |

| Aroma | | | | | | |
|---|---|---|---|---|---|---|
| Total Aroma | 9.5 | 8.5 | 9.5 | 9.5 | 9.5 | 11.5 |
| Artificial Fruit/Berry | 8.0 | 7.5 | 7.5 | 8.0 | 8.0 | 7.0 |
| Total Grain | 3.0 | 3.0 | 3.0 | 3.0 | 3.0 | 2.5 |
| Total Nut | 4.0 | 4.0 | 3.5 | 3.5 | 3.5 | 3.0 |
| Total Off Aroma | 0.5 | 1.0 | 1.0 | 1.0 | 1.0 | 3.5 |
| Total Oil | 0.5 | 1.0 | 0.5 | 0.5 | 0.5 | 3.5 |
| Oxidized | 0.5 | 1.0 | 1.0 | 1.0 | 1.0 | 3.5 |
| First Bite | | | | | | |
| Initial Hardness | 3.0 | 3.0 | 3.0 | 3.0 | 3.0 | 3.0 |

| Flavor | | | | | | |
|---|---|---|---|---|---|---|
| Total Flavor | 11.5 | 11.0 | 11.0 | 11.0 | 11.0 | 13.5 |
| Artificial Fruit/Berry | 9.0 | 9.0 | 9.0 | 9.0 | 9.5 | 8.0 |
| Total Grain | 3.5 | 3.5 | 3.5 | 3.5 | 4.0 | 3.5 |
| Toasted Nut | 3.5 | 4.0 | 3.5 | 4.0 | 4.0 | 2.0 |
| Sweet | 8.5 | 9.0 | 8.5 | 9.0 | 8.5 | 8.0 |
| Total Off Flavor | 1.0 | 1.0 | 1.0 | 1.0 | 1.5 | 5.0 |
| Total Oil | 1.0 | 1.0 | 0.5 | 1.0 | 1.0 | 4.5 |
| Oxidized | 1.0 | 1.0 | 1.0 | 1.0 | 1.0 | 4.5 |

| Texture | | | | | | |
|---|---|---|---|---|---|---|
| Chewiness | 8.0 | 8.0 | 8.0 | 8.0 | 8.0 | 8.0 |
| Crispness | 5.0 | 5.0 | 5.0 | 5.0 | 5.0 | 5.0 |
| Toothpacking | 10.5 | 10.5 | 10.0 | 10.5 | 10.5 | 10.0 |
| % Quality Change | 0-5%A | 5%A | 5%A | 5%A | 5-10%A | 45% |

| | | | | | | |
|---|---|---|---|---|---|---|
| Scale Range 0-15 | | | | | | |

**Table 11: Effect of omega-3 enriched oil/ (snack bar composition with omega-3 fatty acids) and conventional soybean oil (control snack bar) on the sensory attributes of snack bar cereal products at 4 months.**

| Attribute | Control Snack Bar | Snack Bar with SDA-enriched Oil | Snack Bar with Flax Seed Oil | Snack Bar with Algal Oil | Snack Bar with Fish Oil | Snack Bar with Encapsulated Fish Oil |
|---|---|---|---|---|---|---|
| Appearance | | | | | | |
| Grain Color | 4.0 | 4.5 | 4.5 | 5.0 | 3.5 | 5.0 |
| Cranberry Color | 5.0 | 5.0 | 5.0 | 5.0 | 5.0 | 5.0 |
| Shiny | 12.0 | 11.0 | 12.0 | 12.5 | 13.0 | 9.0 |
| Flexibility | 10.0 | 10.0 | 10.0 | 10.5 | 10.0 | 8.0 |

| Aroma | | | | | | |
|---|---|---|---|---|---|---|
| Total Aroma | 9.0 | 8.5 | 8.5 | 9.0 | 9.0 | 6.0 |
| Artificial Fruit/Berry | 8.0 | 7.5 | 7.5 | 7.5 | 8.0 | 5.0 |
| Total Grain | 2.5 | 2.0 | 2.5 | 2.0 | 2.0 | 2.0 |
| Total Nut | 3.5 | 2.0 | 3.0 | 2.5 | 3.0 | 1.5 |
| Total Off Aroma | 1.0 | 2.0 | 1.5 | 2.0 | 1.5 | 5.5 |
| Total Oil | 1.0 | 2.0 | 1.5 | 1.5 | 1.0 | 5.5 |
| Oxidized | 1.0 | 2.0 | 1.5 | 1.5 | 1.0 | 5.5 |

| First Bite | | | | | | |
|---|---|---|---|---|---|---|
| Initial Hardness | 5.0 | 4.5 | 4.5 | 4.0 | 4.0 | 5.0 |

| Flavor | | | | | | |
|---|---|---|---|---|---|---|
| Total Flavor | 10.5 | 10.0 | 10.5 | 10.0 | 11.0 | 6.0 |
| Artificial Fruit/Berry | 9.0 | 8.5 | 8.5 | 8.0 | 9.5 | 5.0 |
| Total Grain | 3.0 | 2.5 | 2.52 | 2.5 | 2.5 | 2.0 |
| Toasted Nut | 3.0 | 2.5 | 3.0 | 3.0 | 3.0 | 2.0 |
| Sweet | 8.5 | 8.0 | 8.0 | 8.0 | 8.5 | 7.5 |
| Total Off Flavor | 1.5 | 3.0 | 1.5 | 2.0 | 2.0 | 6.5 |
| Total Oil | 1.5 | 1.5 | 1.5 | 1.5 | 2.0 | 5.5 |
| Oxidized | 1.5 | 1.5 | 1.5 | 1.5 | 2.0 | 5.5 |

| Texture | | | | | | |
|---|---|---|---|---|---|---|
| Chewiness | 8.5 | 9.0 | 9.0 | 8.5 | 8.5 | 9.5 |
| Crispness | 5.0 | 5.0 | 5.0 | 5.0 | 5.0 | 4.5 |
| Toothpacking | 10.2 | 11.0 | 10.5 | 11.0 | 10.0 | 11.0 |
| % Quality Change | 10%A | 25%A | 20%A | 20-25%A | 20%A | 60% |

| | | | | | | |
|---|---|---|---|---|---|---|
| Scale Range 0-15 | | | | | | |

**Table 12: Effect of omega-3 enriched oil (snack bar composition with omega-3 fatty acids) and conventional soybean oil (control snack bar) on the sensory attributes of snack bar cereal products at 6 months.**

| Attribute | Control Snack Bar | Snack Bar with SDA-enriched Oil | Snack Bar with Flax Seed Oil | Snack Bar with Algal Oil | Snack Bar with Fish Oil | Snack Bar with Encapsulated Fish Oil |
|---|---|---|---|---|---|---|
| Appearance | | | | | | |
| Grain Color | 5.0 | 4.5 | 4.0 | 4.0 | 4.0 | 4.5 |
| Cranberry Color | 5.0 | 4.0 | 5.0 | 4.0 | 4.0 | 5.0 |
| Shiny | 12.5 | 12.5 | 13.0 | 13.0 | 13.0 | 9.0 |
| Flexibility | 10.0 | 10.5 | 10.5 | 10.5 | 10.0 | 9.5 |

| Aroma | | | | | | |
|---|---|---|---|---|---|---|
| Total Aroma | 8.5 | 8.0 | 8.0 | 8.0 | 8.5 | 7.5 |
| Artificial Fruit/Berry | 7.0 | 7.0 | 6.5 | 6.5 | 7.0 | 5.5 |
| Total Grain | 2.0 | 2.0 | 2.0 | 2.0 | 2.0 | 1.0 |
| Total Nut | 2.5 | 2.5 | 2.0 | 2.0 | 2.0 | 1.0 |
| Total Off Aroma | 2.0 | 3.0 | 3.0 | 2.5 | 2.5 | 6.5 |
| Total Oil | 1.0 | 1.5 | 2.0 | 2.0 | 1.0 | 4.5 |
| Oxidized | 2.0 | 3.0 | 3.0 | 2.5 | 2.5 | 6.5 |

| First Bite | | | | | | |
|---|---|---|---|---|---|---|
| Initial Hardness | 3.5 | 3.0 | 3.5 | 4.0 | 3.5 | 4.0 |

| Flavor | | | | | | |
|---|---|---|---|---|---|---|
| Total Flavor | 9.5 | 9.5 | 9.0 | 9.0 | 9.5 | 7.5 |
| Artificial Fruit/Berry | 7.5 | 7.0 | 6.5 | 7.0 | 7.0 | 5.0 |
| Total Grain | 2.5 | 2.0 | 2.0 | 2.0 | 2.0 | 1.0 |
| Toasted Nut | 3.0 | 2.0 | 2.0 | 2.5 | 2.0 | 1.0 |
| Sweet | 9.0 | 8.0 | 9.0 | 8.5 | 9.0 | 7.5 |
| Total Off Flavor | 3.0 | 4.5 | 4.5 | 3.5 | 4.0 | 7.5 |
| Total Oil | 1.5 | 2.5 | 2.5 | 2.5 | 2.0 | 5.5 |
| Oxidized | 2.5 | 3.5 | 4.0 | 3.5 | 3.5 | 7.5 |

| Texture | | | | | | |
|---|---|---|---|---|---|---|
| Chewiness | 9.0 | 9.0 | 9.0 | 9.0 | 8.5 | 9.5 |
| Crispness | 4.5 | 4.0 | 3.5 | 4.5 | 4.0 | 3.0 |
| Toothpacking | 11.0 | 10.5 | 11.0 | 11.0 | 10.5 | 12.0 |
| % Quality Change | 30%B | 35%B | 40%B | 35%B | 35%B | 85% |

| | | | | | | |
|---|---|---|---|---|---|---|
| Scale Range 0-15 | | | | | | |

**Table 13: Effect of omega-3 enriched oil (snack bar composition with omega-3 fatty acids) and conventional soybean oil (control snack bar) on the sensory attributes of snack bar cereal products at 9 months.**

| Attribute | Control Snack Bar | Snack Bar with SDA-enriched Oil | Snack Bar with Flax Seed Oil | Snack Bar with Algal Oil | Snack Bar with Fish Oil | Snack Bar with Encapsulated Fish Oil |
|---|---|---|---|---|---|---|
| Appearance | | | | | | |
| Grain Color | 5.0 | 4.0 | 4.5 | 4.5 | 5.0 | 5.0 |
| Cranberry Color | 5.0 | 4.5 | 4.5 | 4.5 | 4.5 | 5.0 |
| Shiny | 11.5 | 12.0 | 12.0 | 11.0 | 11.0 | 10.5 |
| Flexibility | 8.0 | 9.0 | 9.0 | 8.5 | 8.0 | 6.0 |

| Aroma | | | | | | |
|---|---|---|---|---|---|---|
| Total Aroma | 8.0 | 9.0 | 9.0 | 8.0 | 8.0 | 10.0 |
| Artificial Fruit/Berry | 6.5 | 7.0 | 7.0 | 6.5 | 6.5 | 4.0 |
| Total Grain | 1.5 | 2.0 | 2.0 | 1.5 | 1.5 | 0.5 |
| Total Nut | 1.5 | 2.0 | 2.0 | 1.5 | 1.5 | 0.5 |
| Total Off Aroma | 4.0 | 3.0 | 3.5 | 5.0 | 5.0 | 9.0 |
| Total Oil | 3.0 | 2.0 | 3.0 | 4.0 | 4.0 | 6.0 |
| Oxidized | 3.5 | 2.5 | 3.0 | 4.5 | 5.0 | 9.0 |

| First Bite | | | | | | |
|---|---|---|---|---|---|---|
| Initial Hardness | 4.5 | 3.5 | 4.0 | 4.5 | 4.0 | |

| Flavor | | | | | | |
|---|---|---|---|---|---|---|
| Total Flavor | 8.5 | 11.0 | 10.5 | 8.5 | 9.0 | |
| Artificial Fruit/Berry | 7.0 | 8.5 | 8.0 | 6.0 | 7.0 | |
| Total Grain | 1.5 | 2.5 | 2.0 | 1.0 | 1.5 | |
| Toasted Nut | 2.0 | 2.5 | 2.0 | 1.0 | 1.5 | |
| Sweet | 8.0 | 8.5 | 8.0 | 7.5 | 7.5 | |
| Total Off Flavor | 4.5 | 3.0 | 4.0 | 7.0 | 5.5 | |
| Total Oil | 3.0 | 2.5 | 3.0 | 5.0 | 4.5 | |
| Oxidized | 4.0 | 3.0 | 3.5 | 7.0 | 5.5 | |

| Texture | | | | | | |
|---|---|---|---|---|---|---|
| Chewiness | 10.0 | 9.0 | 9.0 | 10.0 | 10.0 | |
| Crispness | 3.0 | 4.0 | 3.5 | 3.0 | 3.0 | |
| Toothpacking | 12.0 | 11.0 | 11.5 | 12.0 | 12.0 | |
| % Quality Change | 50%U | 30%B | 45%U | 75%U | 65%U | 90%U |

| | | | | | | |
|---|---|---|---|---|---|---|
| Scale Range 0-15 | | | | | | |

**Table 14: Effect of omega-3 enriched oil (snack bar composition with omega-3 fatty acids) and conventional soybean oil (control snack bar) on the sensory attributes of snack bar cereal products at 12 months.**

| Attribute | Control Snack Bar | Snack Bar with SDA-enriched Oil | Snack Bar with Flax Seed Oil | Snack Bar with Algal Oil | Snack Bar with Fish Oil | Snack Bar with Encapsulated Fish Oil |
|---|---|---|---|---|---|---|
| Appearance | | | | | | |
| Grain Color | 6.0 | 4.0 | 5.0 | 4.5 | 5.0 | 6.0 |
| Cranberry Color | 5.5 | 5.0 | 5.0 | 4.5 | 5.0 | 6.0 |
| Shiny | 9.5 | 11.0 | 10.5 | 11.0 | 9.5 | 8.0 |
| Flexibility | 7.0 | 9.0 | 8.0 | 9.0 | 6.0 | 6.0 |

| Aroma | | | | | | |
|---|---|---|---|---|---|---|
| Total Aroma | 7.5 | 8.0 | 7.0 | 9.0 | 7.0 | 7.0 |
| Artificial Fruit/Berry | 5.5 | 6.5 | 5.0 | 7.0 | 5.0 | 4.0 |
| Total Grain | 1.5 | 1.5 | 1.5 | 2.0 | 1.5 | 1.0 |
| Total Nut | 2.0 | 2.5 | 1.5 | 2.5 | 1.5 | 0.5 |
| Total Off Aroma | 3.0 | 3.0 | 4.0 | 5.0 | 4.5 | 7.0 |
| Total Oil | 2.5 | 2.5 | 3.5 | 5.0 | 4.0 | 7.0 |
| Oxidized | 3.0 | 2.5 | 4.0 | 5.0 | 4.5 | 7.0 |

| First Bite | | | | | | |
|---|---|---|---|---|---|---|
| Initial Hardness | 5.5 | 4.0 | 5.0 | 4.0 | 6.0 | |

| Flavor | | | | | | |
|---|---|---|---|---|---|---|
| Total Flavor | 9.0 | 9.5 | 9.0 | 9.5 | 8.5 | |
| Artificial Fruit/Berry | 7.5 | 7.0 | 7.5 | 8.0 | 6.5 | |
| Total Grain | 1.5 | 2.0 | 1.5 | 2.0 | 1.5 | |
| Toasted Nut | 2.0 | 2.0 | 1.5 | 2.0 | 1.0 | |
| Sweet | 8.0 | 7.5 | 8.0 | 8.0 | 7.5 | |
| Total Off Flavor | 3.5 | 3.5 | 4.0 | 5.0 | 5.0 | |
| Total Oil | 3.0 | 2.5 | 3.5 | 4.5 | 4.5 | |
| Oxidized | 3.5 | 3.0 | 4.0 | 5.0 | 5.0 | |

| Texture | | | | | | |
|---|---|---|---|---|---|---|
| Chewiness | 9.5 | 9.0 | 9.0 | 8.5 | 10.0 | |
| Crispness | 3.5 | 4.0 | 3.0 | 4.0 | 3.0 | |
| Toothpacking | 11.0 | 10.5 | 11.5 | 11.0 | 11.5 | |
| % Quality Change | 45%U | 35%BU | 55%U | 60%U | 55%U | 85%U |

| | | | | | | |
|---|---|---|---|---|---|---|
| Scale Range 0-15 | | | | | | |

Conclusion: Throughout the shelf life, the attributes of the snack bar with SDA closely resembled the control snack bar. In comparison to snack bars made with a competitive set of omega-3 oils (i.e., alternative omega-3 fatty acid-containing oils/powder), off flavor after twelve months of shelf life of the snack bar with SDA was not significantly different from the control snack bar, wherein the alternate forms of omega-3 oils were all significantly different from the control. Similar results were obtained for off aroma where the snack bar with SDA was less different from the control snack bar than the alternate sources of omega-3.

### Example 2: Snack Bars - A Hedonic Study

A hedonic study was conducted in which consumers analyzed the overall liking and disliking of the overall flavor for both the control snack bar and the snack bars including omega-3 oils/powder of Example 1.

Specifically, the trained panelists from Example 1 were asked to determine their liking of the flavor and texture of both the control snack bar and the snack bar including 20% (by weight) SDA oil from Example 1. The results are listed in Table 15.

**Table 15: Hedonic Results of Control Snack Bar and Snack Bar Including SDA Oil**

| Question | Snack Bar Including SDA Oil | Control Snack Bar |
|---|---|---|
| Did you experience an aftertaste? | | |
| Yes | 60% | 60% |
| No | 40% | 40% |
| Liking of Aftertaste (9-1)+Mean | 5.31 | 5.42 |

| Overall Flavor | | |
|---|---|---|
| Too Strong | 9% | 14% |
| Just About Right | 65% | 53% |
| Too Weak | 26% | 33% |

| Berry Flavor | | |
|---|---|---|
| Too Strong | 14% | 9% |
| Just About Right | 60% | 51% |
| Too Weak | 26% | 40% |

| Sweetness | | |
|---|---|---|
| Too Sweet | 16% | 7% |
| Just About Right | 63% | 77% |
| Not Sweet Enough | 21% | 16% |

| Texture | | |
|---|---|---|
| Too Chewy/Crispy | 12% | 14% |
| Just About Right | 70% | 72% |
| Not Chewy/Crispy Enough | 19% | 14% |

| Acceptability | | |
|---|---|---|
| Very Acceptable | 40% | 50% |
| Somewhat Acceptable | 43% | 33% |
| Somewhat Unacceptable | 14% | 14% |
| Very Unacceptable | 2% | 2% |
| Overall Liking (9-1)+Mean | 6.47 | 6.6 |
| Overall Liking (9-1)+Mean | 6.28 | 6.53 |

| | | |
|---|---|---|
| *Liking Scale: 9 = Like Extremely; 8 = Like Very Much; 7 = Like Moderately; 6 = Like Slightly; 5 = Neither Like Nor Dislike; 4 = Dislike Slightly; 3 = Dislike Moderately; 2 = Dislike Very Much; 1 = Dislike Extremely. | | |

Results of the study showed that there was no statistically significant difference in the liking of the overall flavor between the control snack bar and the snack bar including SDA-enriched oil. Accordingly, the SDA-enriched snack bar is as acceptable and liked as the control bar.

### REFERENCES

1. Harris WS, DiRienzo MA, Sands SA, George C, Jones PG, and Eapen, AK (2007) Stearidonic Acid Increases the Red Blood Cell and Heart Eicosapentaenoic Acid Content in Dogs, Lipids 42:325-33.
2. James, M.J., Ursin V.M., and Cleland L.G. (2003) Metabolism of stearidonic acid in human subjects: comparison with the metabolism of other n-3 fatty acids. AM J CLIN NUTR 2003;77:1140-5.
3. Miles EA, Banerjee T. and Calder, P.C. (2004), The influence of different combinations of gamma-linolenic acid, stearidonic acid and EPA on immune function in healthy young male subjects. BR J NUTR. 2004 Jun;91(6):893-903.
4. Ursin G. et al., (2003), Modification of plant lipids for human health: Development of functional land-based omega-3 fatty acids. J. NUTR. 133:4271-4274.

## Claims

1. A cereal product comprising from 40 to 60 wt.% of a binder material and from 40 to 60 wt.% of a cereal mixture, wherein the binder material comprises
a stearidonic acid (SDA)-enriched soybean oil having from 10 to 30 wt.% SDA,
from 0.5% to 1.5% by weight lecithin,
from 0.1% to 6.0% by weight liquid oil,
from 10% to 40 % by weight sugar syrup or from 0.5% to 5% by weight sugar alcohol,
from 1.0% to 5.0% by weight humectant, and
from 0.2% to 1.0% by weight salt.

2. The cereal product of claim 1, wherein the binder material comprises from 10% to 40 % by weight sugar syrup.

3. The cereal product of claim 1, wherein the binder material comprises from 0.5% to 5% by weight sugar alcohol.

4. The cereal product of any one of claims 1 to 3, wherein the liquid oil is selected from the group consisting of soybean oil, canola oil, corn oil, rapeseed oil, palm oil, and combinations thereof.

5. The cereal product of any one of claims 1 to 4, wherein the cereal mixture comprises at least one of rolled oats, nugget/crisp particulates, dry-milled corn meal, wheat, rice, barley, and combinations thereof.

6. The cereal product of any one of claims 1 to 5 in the form of a snack bar.

7. The cereal product of claim 6, further comprising a coating selected from the group consisting of caramel, chocolate, yogurt, fruit, nuts, grains, and combinations thereof.

8. The cereal product of claim 6, wherein the snack bar is a multi-layer snack bar.

## Patentansprüche

1. Getreideprodukt, das 40 bis 60 Gew.-% eines Bindemittels und 40 bis 60 Gew.-% eines Getreidegemischs umfasst, wobei das Bindemittel umfasst:
ein mit Stearidonsäure (SDA) angereichertes Sojaöl mit 10 bis 30 Gew.-% SDA,
0,5 bis 1,5 Gew.-% Lecithin,
0,1 bis 6,0 Gew.-% flüssiges Öl,
10 bis 40 Gew.-% Zuckersirup oder 0,5 bis 5 Gew.-% Zuckeralkohol,
1,0 bis 5,0 Gew.-% Feuchthaltemittel und
0,2 bis 1,0 Gew.-% Salz.

2. Getreideprodukt gemäß Anspruch 1, wobei das Bindemittel 10 bis 40 Gew.-% Zuckersirup umfasst.

3. Getreideprodukt gemäß Anspruch 1, wobei das Bindemittel 0,5 bis 5 Gew.-% Zuckeralkohol umfasst.

4. Getreideprodukt gemäß einem der Ansprüche 1 bis 3, wobei das flüssige Öl aus der Gruppe ausgewählt ist, die aus Sojaöl, Canolaöl, Maisöl, Rapsöl, Palmöl und Kombinationen davon besteht.

5. Getreideprodukt gemäß einem der Ansprüche 1 bis 4, wobei das Getreidegemisch wenigstens eines aus Haferflocken, Nugget/Chip-Teilchen, trockengemahltem Maismehl, Weizen, Reis, Gerste und Kombinationen davon umfasst.

6. Getreideprodukt gemäß einem der Ansprüche 1 bis 5 in Form eines Snackriegels.

7. Getreideprodukt gemäß Anspruch 6, weiterhin umfassend eine Beschichtung, die aus der Gruppe ausgewählt ist, welche aus Karamel, Schokolade, Joghurt, Früchten, Nüssen, Körnern und Kombinationen davon besteht.

8. Getreideprodukt gemäß Anspruch 6, wobei der Snackriegel ein mehrschichtiger Snackriegel ist.

## Revendications

1. Produit céréalier comprenant de 40 à 60 % en poids d'un matériau liant et de 40 à 60 % en poids d'un mélange de céréales, dans lequel le matériau liant comprend
une huile de soja enrichie en acide stéaridonique (SDA) ayant de 10 à 30 % en poids de SDA,
de 0,5 % à 1,5 % en poids de lécithine,
de 0,1 % à 6,0 % en poids d'huile liquide,
de 10 % à 40 % en poids de sirop de sucre ou de 0,5 % à 5 % en poids d'alcool de sucre,
de 1,0 % à 5,0 % en poids d'humectant, et
de 0,2 % à 1,0 % en poids de sel.

2. Produit céréalier selon la revendication 1, dans lequel le matériau liant comprend de 10 % à 40 % en poids de sirop de sucre.

3. Produit céréalier selon la revendication 1, dans lequel le matériau liant comprend de 0,5 % à 5 % en poids d'alcool de sucre.

4. Produit céréalier selon l'une quelconque des revendications 1 à 3, dans lequel l'huile liquide est choisie dans le groupe constitué par l'huile de soja, l'huile de canola, l'huile de maïs, l'huile de colza, l'huile de palme, et leurs combinaisons.

5. Produit céréalier selon l'une quelconque des revendications 1 à 4, dans lequel le mélange de céréales comprend au moins l'un parmi les flocons d'avoine, les particules de pépites/croustilles, la semoule de maïs broyée à sec, le riz, l'orge, et leurs combinaisons.

6. Produit céréalier selon l'une quelconque des revendications 1 à 5, sous la forme d'une barre d'en-cas.

7. Produit céréalier selon la revendication 6, comprenant en outre un enrobage choisi dans le groupe constitué par le caramel, le chocolat, le yaourt, les fruits, les noix, les graines, et leurs combinaisons.

8. Produit céréalier selon la revendication 6, dans lequel la barre d'en-cas est une barre d'en-cas multicouche.
